# EUROPÄISCHE PATENTSCHRIFT

(11) **EP 3 064 657 B1**
(45) Veröffentlichungstag und Bekanntmachung des Hinweises auf die Patenterteilung: **02.10.2019**
(21) Anmeldenummer: 16000324.0
(22) Anmeldetag: 10.02.2016
(51) Int. Cl.: E03C 1/04, F16K 11/00

(54) **SANITÄRARMATUR**
SANITARY FITTING
ROBINETTERIE

(30) Priorität: 02.03.2015 DE 102015002569
(43) Veröffentlichungstag der Anmeldung: 07.09.2016
(73) Patentinhaber: Grohe AG, 58675 Hemer (DE)
(72) Erfinder: Depiere, Bert, 3150 Tildonk (BE); van Leeuwen, Ruurd, 3571 KJ Utrecht (NL); Gransow, Eckhard, 58730 Fröndenberg (DE); Woesthoff, Wulf, 58675 Hemer (DE)

(56) Entgegenhaltungen:
- EP-A1- 0 645 568
- EP-A2- 2 388 676
- DE-A1- 10 044 684
- DE-A1-102005 052 919

## Beschreibung

Die Erfindung betrifft eine Sanitärarmatur nach dem Oberbegriff des Patentanspruches 1.

Eine solche Sanitärarmatur wird in einem Dusch- und/oder Badewannensystem sowohl zur Einstellung der Mischwassertemperatur als auch zur Einstellung der Durchflussmenge zu einen oder mehreren Endverbrauchern eingesetzt, zum Beispiel zu einem Badewannenauslauf, einer Handbrause und/oder einer Kopfbrause.

Aus der EP 2 386 927 A2 ist eine solche Sanitärarmatur bekannt, die ein in etwa hohlzylindrisches Armaturengehäuse (zum Beispiel aus Messing) aufweist, in das ein nutzerseitig betätigbares Mischventil, zum Beispiel ein Thermostat-Mischventil, eingesetzt ist, mit dem eine Mischwassertemperatur einstellbar ist. Das Mischventil ist über einen Heißwasserkanal und einen Kaltwasserkanal mit gehäuseseitigen Heißwasser- und Kaltwasseranschlüssen verbunden. Der Heißwasserkanal ist als ein um das Mischventil verlaufender Ringkanal ausgeführt, der radial außen unmittelbar durch eine gehäuseseitige Ringkanalwand begrenzt ist. Das Heißwasser wird von einem Versorgungsnetz über den Heißwasseranschluss sowie den Ringkanal über Heißwasserzuläufe in das Mischventil geleitet und dort in einer Mischkammer mit dem Kaltwasser durchmischt. Das Mischwasser wird im weiteren Strömungsverlauf durch einen Mischwasserkanal zu einer Wasserverteileinheit (zum Beispiel ein nutzerseitig einstellbares Oberteil) geführt, in der die Mischwassermenge zu wenigstens einem Verbraucher einstellbar ist.

In der Sanitärarmatur kann eine sogenannte Cooltouch-Funktion integriert sein, mittels der eine Wärmeableitung vom Heißwasser-Ringkanal nach außen zu einer potentiellen Berührfläche für den Nutzer reduzierbar ist. In der obigen EP 2 386 927 A2 ist diese Funktion durch einen zusätzlichen Kalt- oder Mischwasserkanal realisiert, der in Radialrichtung betrachtet zwischen der, den Heißwasser-Ringkanal begrenzenden Kanalwand und einer Gehäuseaußenwand zwischengeordnet ist. Das Armaturengehäuse ist daher konstruktiv entsprechend aufwendig gestaltet und nur mit erhöhtem Fertigungsaufwand sowie bauraumintensiv mit vergleichsweise großem Gehäusedurchmesser herstellbar.

Aus der DE 10 2005 052 919 A1 ist eine gattungsgemäße Sanitärarmatur bekannt, die ein Armaturengehäuse mit einem Heißwasser-Anschlussprofil aufweist. Das Heißwasser-Anschlussprofil ist als eine Hohlansatz realisiert, dessen Innenumfang mit einem Isolierelement ausgekleidet ist. Aus der EP 0 645 568 A1 ist eine weitere Sanitärarmatur bekannt, das ein rohrförmiges Armaturengehäuse aufweist, an dessen Innenumfang ein Harz-Rohrkörper vorgesehen ist.

Die Aufgabe der Erfindung besteht darin, eine Sanitärarmatur bereitzustellen, bei der das Armaturengehäuse im Vergleich zum Stand der Technik bauraumgünstig sowie fertigungstechnisch einfach herstellbar ist.

Die Aufgabe ist durch die Merkmale des Patentanspruches 1 gelöst. Bevorzugte Weiterbildungen der Erfindung sind in den abhängigen Ansprüche offenbart.

Gemäß dem Patentanspruch 1 wird der Verbrühschutz nicht mehr durch einen Kalt- oder Mischwasserkanal bereitgestellt, sondern vielmehr durch ein Isolierelement. Das Isolierelement ist in den Heißwasserkanal eingesetzt und überdeckt zumindest teilweise die dem Heißwasserkanal zugewandte Seite der Kanalwand. Das Isolierelement kann bevorzugt ein elastisch nachgiebiges Kunststoffteil sein und zum Beispiel mit einer vorgegebenen Vorspannkraft gegen die Kanalwand gedrückt sein, wie später näher beschrieben ist.

Erfindungsgemäß ist die, den Heißwasserkanal begrenzende sowie vom Isolierelement überdeckte Kanalwand einerseits im Querschnitt durchgängig aus einem Vollmaterial mit bevorzugt geringer Wandstärke ausgebildet, wodurch sich der Außendurchmesser des Armaturengehäuses im Vergleich zum Stand der Technik reduzieren lässt. Andererseits bildet aufgrund der gesteigerten Wärmeisolierung die, von dem Heißwasserkanal abgewandte Seite der Kanalwand unmittelbar eine potentielle Berührfläche für den Nutzer, ohne dass zusätzlich noch ein Kalt- oder Mischwasserkanal zur Kühlung zwischengeschaltet sein müsste.

Der Heißwasserkanal weist einen um das Mischventil laufenden Ringkanal auf. Dieser ist radial innen vom Mischventil und radial außen von der, vom Isolierelement überdeckten, gehäuseseitigen Kanalwand begrenzt.

Das Armaturengehäuse ist hohlzylindrisch ausgebildet und weist an einer Stirnseite eine innere Aufnahmekontur auf, die mit Bezug auf eine Gehäuseachse bevorzugt im Wesentlichen rotationssymmetrisch ausgeführt ist und in der das Mischventil einsetzbar ist. Zudem weist das Armaturengehäuse quer zur Gehäuseachse hohlzylindrische Anschlussprofile für den Heiß- und Kaltwasseranschluss auf. Dabei ist die den Heißwasser-Ringkanal radial außen begrenzende Kanalwand Bestandteil dieser inneren Aufnahmekontur. Radial außerhalb der Mischventil-Aufnahmekontur ist das Heißwasser-Anschlussprofil im Armaturengehäuse ausgebildet, das mittels eines Überströmkanals mit dem Heißwasser-Ringkanal verbindbar ist.

In einer Ausführungsform kann das Isolierelement einen ringförmig geschlossenen Grundkörper aufweisen. Dessen Außendurchmesser ist in seinem demontierten Fertigungszustand um ein Übermaß größer ausgelegt als der Innendurchmesser der Heißwasser-Ringkanalwand. In diesem Fall kann das Isolierelement nach erfolgtem Zusammenbau in seiner Einbaulage unter Aufbau einer elastischen Rückstellkraft in Druckanlage mit der radial äußeren Heißwasser-Ringkanalwand gebracht sein, wodurch zuverlässig etwaige Strömungs-Störkonturen im Ringkanal vermieden sind.

In einer anderen Ausführungsform kann der ringförmige Grundkörper nicht geschlossen, sondern vielmehr C-förmig offen gestaltet sein. Die beiden in Umfangsrichtung einander zugewandten Stirnseiten des C-förmigen Isolierelementes können eine Heißwasseröffnung begrenzen, durch die das Heißwasser in den Heißwasser-Ringkanal einführbar ist. Der ringförmige, C-förmig offene Grundkörper kann eine radial nach innen abragende Stützkontur aufweisen, die auf dem radial inneren Mischventil abgestützt ist und die den ringförmigen Grundkörper zuverlässig gegen die radial äußere Heißwasser-Ringkanalwand drückt. Die Stützkontur kann beispielhaft durch eine Anzahl von radial nach innen abragenden Radialstegen ausgeführt sein.

Für eine dauerhaft lagesichere Positionierung im Armaturengehäuse kann der ringförmige Grundkörper des Isolierelementes eine Verdrehsicherungs-Kontur aufweisen. Die Verdrehsicherungs-Kontur kann radial außen am ringförmigen Grundkörper ausgebildet sein oder gegebenenfalls in Axialrichtung abragen. In der Einbaulage ist die Verdrehsicherungs-Kontur des Isolierelementes in Eingriff mit einer korrespondierenden gehäuseseitigen Gegenkontur. In einer speziellen Ausführungsform kann die Verdrehsicherungs-Kontur beispielhaft eine radial nach außen abragende Rastnase sein, die in einen korrespondierenden gehäuseseitigen Freiraum einragt. Alternativ dazu kann die Verdrehsicherungs-Kontur ein radial nach außen abragender Einlaufstutzen sein, der die im ringförmigen Grundkörper des Isolierelementes ausgebildete Heißwasseröffnung begrenzt und formschlüssig in das hohlzylindrische Heißwasser-Anschlussprofil oder in den Überströmkanal einragt.

In einer weiteren Konkretisierung kann sich am Mischventil ausgangsseitig ein Mischwasserkanal anschließen, der zu einer nutzerseitig einstellbaren Wasserverteileinheit geführt ist. In der Wasserverteileinheit (zum Beispiel ein mittels eines Drehknebels betätigbares Oberteil) ist die Mischwassermenge zu wenigstens einen oder mehreren Verbrauchern einstellbar. In einer Weiterführung der Erfindung kann das Isolierelement in Doppelfunktion zugleich auch einen Mischkanal-Abschnitt bilden. In diesem Fall ist der ringförmige Grundkörper des Isolierelementes in der Axialrichtung unter Bildung des Mischkanal-Abschnittes bis über das Mischventil hinaus verlängert.

Darüber hinaus kann das Isolierelement zusätzlich auch eine Zentrierfunktion übernehmen, um eine lagesichere Positionierung des Mischventils im Armaturengehäuse zu gewährleisten. In diesem Fall weist das Isolierelement einen hohlzylindrischen Zentrierabschnitt auf. Dieser ist, in Axialrichtung betrachtet, zwischen dem ringförmigen Grundkörper und dem Mischwasserkanal-Abschnitt ausgebildet. Zudem ist der Zentrierabschnitt des Isolierelementes, in der Radialrichtung betrachtet, spielfrei dem Mischventil und der hohlzylindrischen inneren Aufnahmekontur des Armaturengehäuses zwischengeschaltet.

Alternativ und/oder zusätzlich zu den vorangegangenen Erfindungsaspekten kann das Isolierelement zusätzlich eine Klebschicht aufweisen, mittels der es an der Kanalwand fixierbar ist. Auf diese Weise kann gegebenenfalls auf eine Druckkraft-Beaufschlagung des Isolierelementes verzichtet werden, um eine Druckanlage des Isolierelementes an der Kanalwand sicherzustellen.

Die Erfindung und ihre vorteilhaften Aus- und Weiterbildungen sowie deren Vorteile werden nachfolgend anhand von Zeichnungen näher erläutert.

Es zeigen:
- Fig. 1: eine Vorderansicht auf eine Sanitärarmatur;
- Fig. 2 bis 4: ein erstes Ausführungsbeispiel der Erfindung;
- Fig. 5 bis 7: ein zweites Ausführungsbeispiel;
- Fig. 8 bis 10: ein drittes Ausführungsbeispiel;
- Fig. 11 und 12: ein viertes Ausführungsbeispiel;
- Fig. 13 bis 15: ein fünftes Ausführungsbeispiel;
- Fig. 16 und 17: ein sechstes Ausführungsbeispiel; sowie
- Fig. 18: eine Seitenschnittdarstellung eines nicht von der Erfindung umfassten Vergleichsbeispiels.

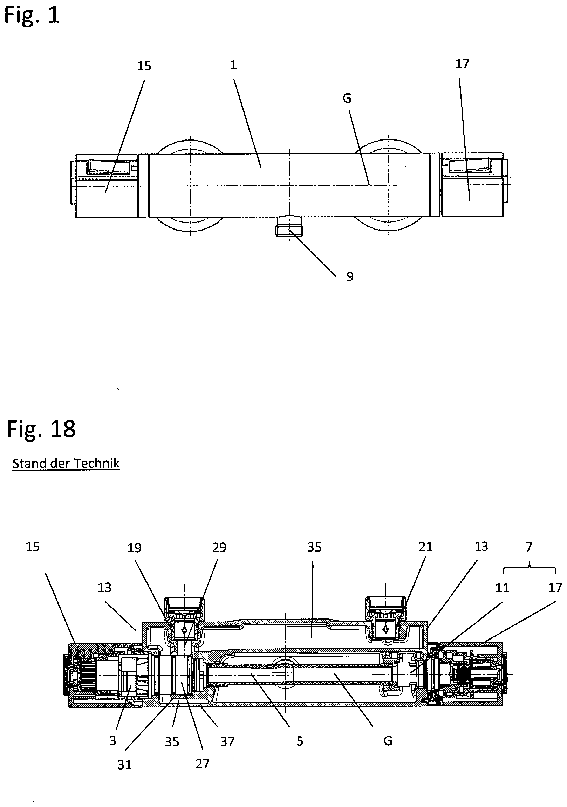

In der Fig. 1 ist beispielhaft eine Sanitärarmatur für ein Brausensystem gezeigt, mittels der zum Beispiel eine nicht dargestellte Handbrause bedienbar ist. Der grundsätzliche Aufbau sowie die Funktionsweise der Sanitärarmatur werden nachfolgend zum einfacheren Verständnis der Erfindung anhand der in der Fig. 18 gezeigten Schnittdarstellung beschrieben, die einen nicht von der Erfindung umfassten gattungsgemäßen Stand der Technik zeigt. In der Fig. 18 ist in dem Armaturengehäuse 1 ein Thermostat-Mischventil 3, ein Mischwasserkanal 5 sowie eine Wasserverteileinheit 7 angeordnet. Die Wasserverteileinheit 7 weist beispielhaft ein, zu einem Verbraucheranschluss 9 (Fig. 1) führendes Oberteil 11 auf.

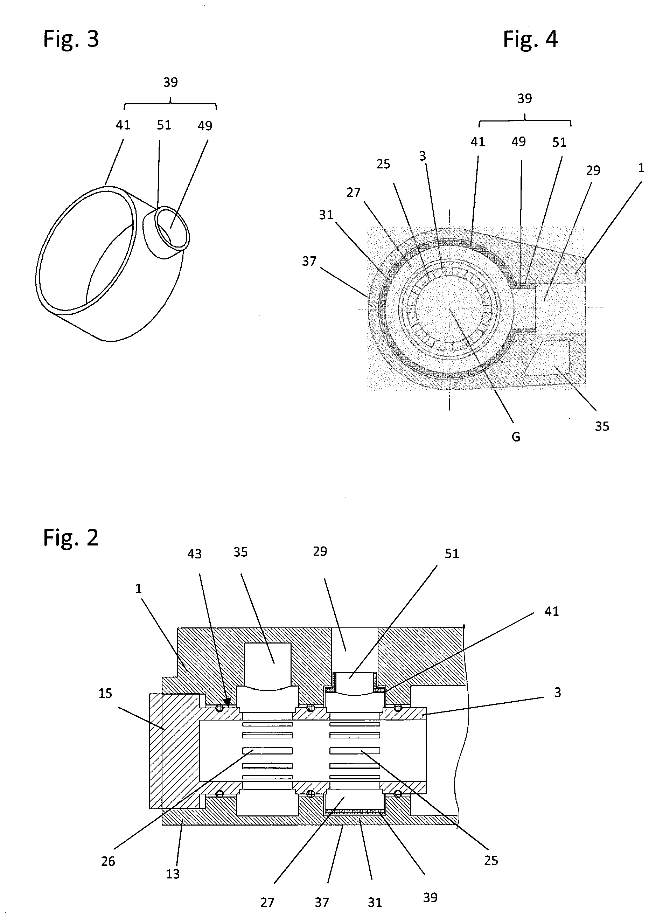

An den beiden, in Axialrichtung einander gegenüberliegenden Stirnseiten 13 des Armaturengehäuses 1 sind in der Fig. 18 jeweils linksseitig ein erster Betätigungsknebel 15 und rechtsseitig ein zweiter Betätigungsknebel 17 angeordnet. Mit dem ersten Betätigungsknebel 15 wird das Thermostat-Mischventil 3 zur Einstellung einer Mischwassertemperatur manuell drehbetätigt. Mit dem zweiten Betätigungsknebel 17 wird die zum Verbraucher geführte Mischwassermenge eingestellt. Zudem weist das Armaturengehäuse 1 Heiß- und Kaltwasser-Anschlussprofile 19, 21 auf, über die Heiß-/Kaltwasser vom Versorgungsnetz zum Mischventil 3 geführt wird. Ausgangsseitig schließt sich am Mischventil 3 der bereits erwähnte Mischwasserkanal 5 an, der das Mischwasser bis zum Oberteil 11 führt. Das hohlzylindrische Heißwasser-Anschlussprofil 19 ist über einen Heißwasserkanal 27 strömungstechnisch mit Heißwasser-Zuläufen 25 des Mischventils 3 in Verbindung, wie sie in den Fig. 2, 4, 5, 8 sowie 10 und 11 gezeigt sind. In der Fig. 18 ist der Heißwasserkanal 27 ein das Mischventil 5 umgebender Ringkanal. Von diesem ragt radial nach außen ein Überströmkanal 29 ab, der in das Heißwasser-Anschlussprofil 19 mündet.

Wie aus der Fig. 18 weiter hervorgeht, ist der Heißwasser-Ringkanal 27 radial innen durch das Mischventil 3 und radial außen durch eine gehäuseseitige Ringkanalwand 31 definiert. Zur Bereitstellung einer Cooltouch-Funktionalität ist in der Fig. 18 die Kanalwand 31 im Querschnitt nicht aus einem Vollmaterial gefertigt, sondern vielmehr als ein Hohlprofil ausgeführt, in dem ein Kaltwasser-Kühlkanal 35 geführt ist. Auf diese Weise wird an einer potentiellen Berührfläche 37 des Armaturengehäuses 1 ein Verbrühschutz für den Nutzer bereitgestellt.

In den Fig. 1 bis 4 ist ein erstes Ausführungsbeispiel der Erfindung gezeigt, dessen grundsätzlicher Aufbau im Wesentlichen identisch ist mit dem in der Fig. 18 erläuterten Aufbau. Von daher wird auf die Beschreibung der Fig. 18 verwiesen. Im Unterschied zur Fig. 18 ist in den Fig. 2 bis 4 der Verbrühschutz nicht mehr mit einer als Hohlprofil ausgeführten Ringkanalwand 31 bereitgestellt, sondern mit einem Isolierelement 39. Das Isolierelement 39 weist gemäß der Fig. 3 einen ringfömig geschlossenen Grundkörper 41 auf. In der, in der Fig. 3 gezeigten demontierten Fertigungslage weist der ringförmige Grundkörper 41 einen Außendurchmesser auf, der um ein vorgegebenes Übermaß größer ist als der Innendurchmesser der radial äußeren Ringkanalwand 31. Auf diese Weise wird erreicht, dass das Isolierelement 39 in seiner Einbaulage (Fig. 2 oder 4) unter Aufbau einer Rückstellkraft in Druckanlage mit der Ringkanalwand 31 verbleibt.

Wie aus der Fig. 2 weiter hervorgeht, weist das hohlzylindrische Armaturengehäuse 1 an seiner linken Stirnseite 13 eine innere Aufnahmekontur 43 auf, in der das Mischventil 3 eingesetzt ist. Die gehäuseseitige Ringkanalwand 31 ist hierbei ein Bestandteil der inneren Aufnahmekontur 43 des Armaturengehäuses 1. In der Fig. 2 ist im Hinblick auf eine einfachere Darstellung lediglich ein Außengehäuse des Thermostat-Mischelementes angedeutet, in dem die Heißwasser-Zuläufe 25 und die Kaltwasser-Zuläufe 26 ausgebildet sind.

Wie aus den Fig. 2 bis 4 weiter hervorgeht, weist der ringförmige Grundkörper 41 des Isolierelementes 39 eine Heißwasseröffnung 49 auf, die von einem radial nach außen ragenden Einlassstutzen 51 begrenzt ist. Der Einlassstutzen 51 ist gemäß der Fig. 2 und 4 formschlüssig in Anlage mit dem Überströmkanal 29, wodurch eine dauerhafte Verdrehsicherung des Isolierelementes 39 gewährleistet ist.

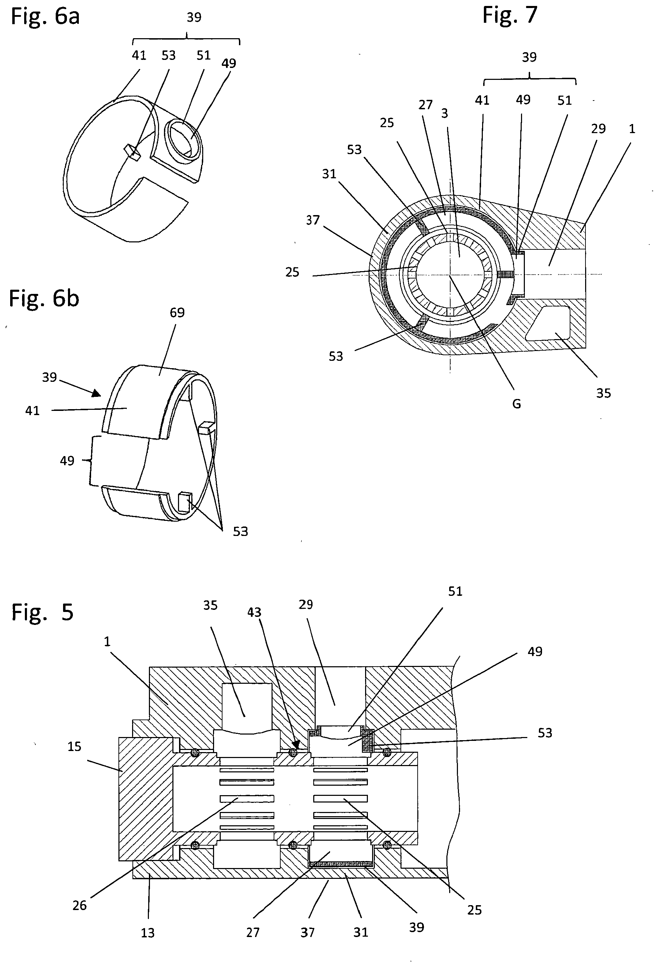

In den Fig. 5 bis 7 ist ein zweites Ausführungsbeispiel gezeigt, in dem, im Unterschied zum vorangegangenen Ausführungsbeispiel, der ringförmige Grundkörper 41 nicht mehr geschlossen, sondern vielmehr C-förmig offen ausgeführt ist. Auf diese Weise wird eine Montagevereinfachung erzielt. Zudem weist der ringförmige Grundkörper 41 radial nach innen abragende Abstandhalter 53 auf, die sich auf dem Mischventil 3 abstützen und die den ringförmigen Grundkörper 41 mit einer vorgegebenen Vorspannkraft dauerhaft in Druckanlage mit der Heißwasser-Ringkanal 31 bringt. In der Fig. 6b ist am Außenumfang des Isolierelements 39 zusätzlich eine Klebschicht 69 aufgebracht.

Im Unterschied zum Stand der Technik ist erfindungsgemäß die Heißwasser-Ringkanalwand 31 im Querschnitt nicht mehr mit einem Hohlprofil (für den Kühlwasserkanal) ausgebildet, sondern vielmehr durchgängig aus einem Vollmaterial sowie mit geringer Wandstärke ausgeführt. Zudem bildet die, von dem Heißwasser-Ringkanal 27 abgewandte Seite der Kanalwand 31 unmittelbar die potentielle Berührfläche 37 für den Nutzer.

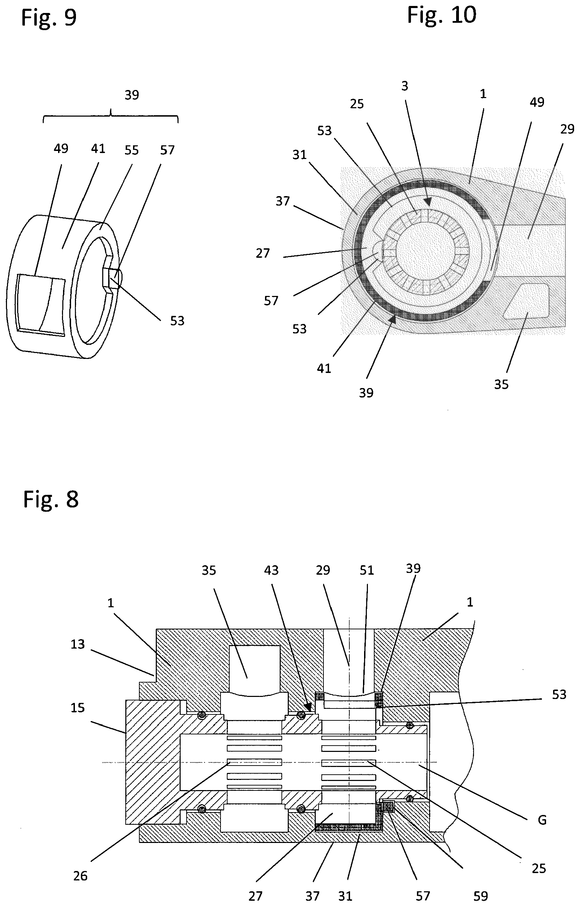

In dem, in den Fig. 8 bis 10 gezeigten dritten Ausführungsbeispiel ist der Grundkörper 41 des Isolierelementes 39 wiederum ringförmig geschlossen ausgebildet, und zwar mit einer Heißwasser-Öffnung 49, jedoch ohne einen Einlassstutzen 51. Der ringförmige Grundkörper 41 weist gemäß den Fig. 8 bis 10 rechtsseitig eine nach innen abgewinkelte Ringschulter 55 auf, an der ein in Axialrichtung nach außen abragender Positionierstift 57 angeordnet ist. Der Positionierstift 57 ragt in der Fig. 8 in eine korrespondierende, gehäuseseitige Gegenkontur 59 ein, und zwar unter Bildung einer Verdrehsicherung.

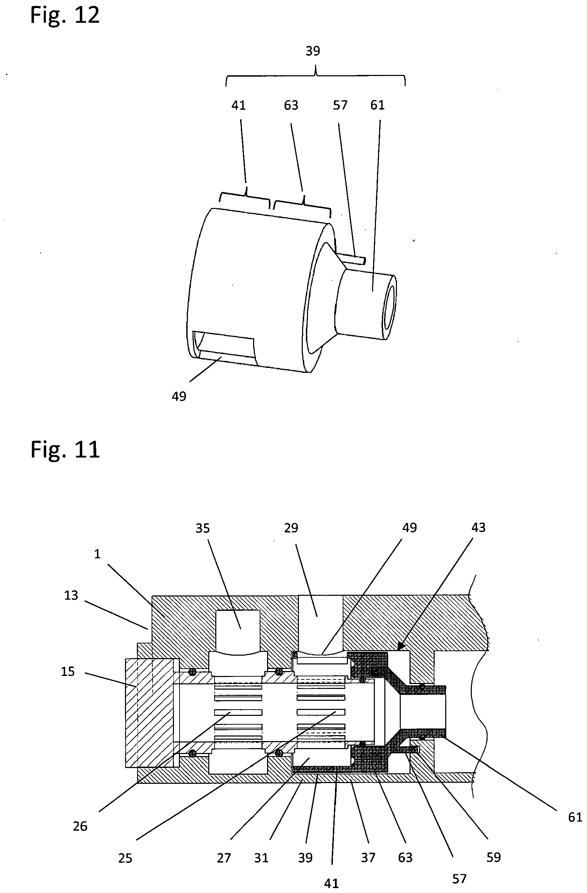

In dem, in den Fig. 11 und 12 gezeigten vierten Ausführungsbeispiel ist der ringförmige Grundkörper 41 des Isolierelementes in der Axialrichtung unter Bildung eines Mischwasserkanal-Abschnittes 61 bis über das Mischventil 3 hinaus verlängert. Zwischen dem ringförmigen Grundkörper 41 und dem Mischwasserkanal-Abschnitt 61 weist das Isolierelement 39 zusätzlich einen hohlzylindrischen Zentrierabschnitt 63 auf. Dieser ist in der Radialrichtung betrachtet zwischen dem Mischventil 3 und der inneren Aufnahmekontur 43 des Armaturengehäuses 1 angeordnet und unterstützt eine lagerichtige Positionierung des Mischventils 3 im Armaturengehäuse 1. Zudem weist das Isolierelement 39 in den Fig. 11 und 12 einen axial abragenden Positionierstift 57 auf, der unter Bildung einer Verdrehsicherung in eine korrespondierende gehäuseseitige Gegenkontur 59 einragt.

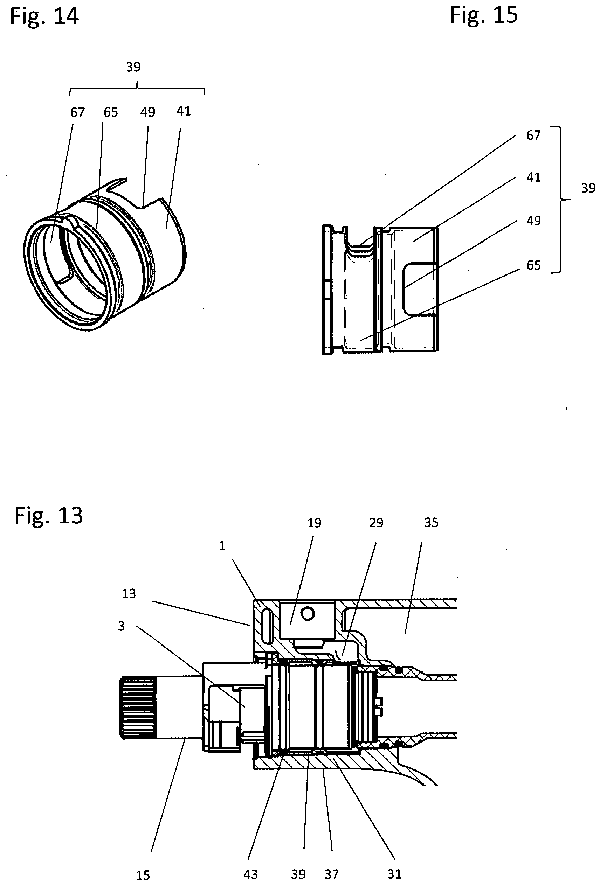

In den Fig. 13 bis 15 ist ein weiteres Ausführungsbeispiel gezeigt, in dem das Isolierelement 39 wiederum einen ringförmig geschlossenen Grundkörper 41 sowie eine Heißwasseröffnung 49 aufweist. Der Grundkörper 41 ist in den Fig. 13 bis 15 an seiner, dem Mischkanal 5 axial gegenüberliegenden Seite mit einem hohlzylindrischen Kaltwasser-Abschnitt 65 (Fig. 14) verlängert, der eine Kaltwasser-Öffnung 67 aufweist, um durch den das Kaltwasser in die Kaltwasser-Zuläufe 26 des Mischventils 3 einströmen kann.

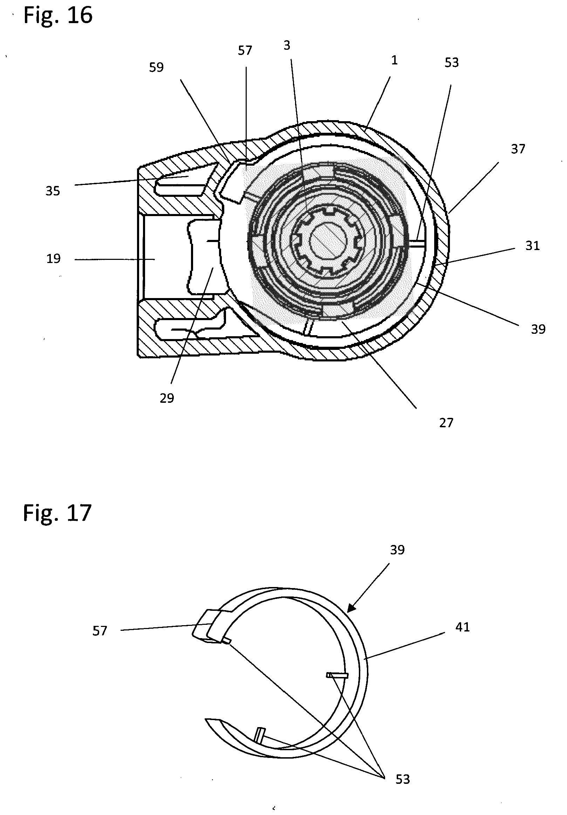

In den Fig. 16 und 17 ist in einem fünften Ausführungsbeispiel ein weiteres Isolierelement 39 gezeigt, das einen C-förmigen, das heißt ringförmig offenen Grundkörper 41 aufweist. Radial innenseitig sind am Grundkörper 41 Radialstege angeformt, die sich in der Einbaulage auf dem Mischventil 3 abstützen. Radial außenseitig weist der ringförmige Grundkörper 41 zur Bildung einer Verdrehsicherung eine Rastnase 57 auf, die in Einbaulage (Fig. 16) in eine korrespondierende Gegenkontur 59 einragt.

### Bezugszeichenliste

- 1: Armaturengehäuse
- 3: Mischventil
- 5: Mischwasserkanal
- 7: Wasserverteileinheit
- 9: Verbraucheranschluss
- 11: Oberteil
- 13: Stirnseiten
- 15, 17: Bedienknebel
- 19, 21: Anschlussprofile
- 25, 26: Heiß-/Kaltwasser-Zuläufe
- 27: Heißwasserkanal
- 29: Überströmkanal
- 31: gehäuseseitige Kanalwand
- 35: Kaltwasser-Kanal
- 37: Berührfläche
- 39: Isolierelement
- 41: ringförmiger Grundkörper
- 43: innere Aufnahmekontur
- 49: Heißwasser-Öffnung
- 51: Einlassstutzen
- 53: Abstandhalter
- 55: Ringschulter
- 57: Verdrehsicherungs-Kontur
- 59: Gegenkontur
- 61: Mischwasserkanal
- 63: Zentrierabschnitt
- 65: Kaltwasser-Abschnitt
- 67: Kaltwasser-Öffnung
- 69: Klebschicht
- G: Gehäuseachse

## Patentansprüche

1. Sanitärarmatur, mit einem Armaturengehäuse (1), in dem ein nutzerseitig betätigbares Mischventil (3) zur Einstellung einer Mischwassertemperatur angeordnet ist, das über einen Heißwasserkanal mit einem gehäuseseitigen Heißwasseranschluss und über einen Kaltwasserkanal (35) mit einem gehäuseseitigen Kaltwasseranschluss verbunden ist, wobei der Heißwasserkanal zumindest teilweise von einer gehäuseseitigen Kanalwand begrenzt ist, wobei die Sanitärarmatur für einen Verbrühschutz zumindest ein Isolierelement (39) aufweist, wobei der Heißwasserkanal ein um das Mischventil (3) laufender Heißwasser-Ringkanal (27) ist, der radial innen vom Mischventil (3) und radial außen von einer gehäuseseitigen Ringkanalwand (31) begrenzt ist, wobei das Armaturengehäuse (1) hohlzylindrisch ausgebildet ist und an einer Stirnseite (13) eine innere Aufnahmekontur (43) aufweist, in der das Isolierelement (39) eingesetzt ist, und wobei das Armaturengehäuse (1) quer zur Gehäuseachse (G) hohlzylindrische Anschlussprofile (19, 21) für den Heiß- und Kaltwasseranschluss aufweisen, und wobei das Heißwasser-Anschlussprofil (19) radial außerhalb der Mischventil-Aufnahmekontur (43) ausgebildet ist, und wobei das Armaturengehäuse (1) einen Überströmkanal (29) aufweist, der den Heißwasser-Ringkanal (27) mit dem Heißwasser-Anschlussprofil (19) verbindet, **dadurch gekennzeichnet, dass** das Isolierelement (39) die dem Heißwasser-Ringkanal (27) zugewandte Seite der Ringkanalwand (31) zumindest teilweise überdeckt, und dass die den Heißwasser-Ringkanal (27) begrenzende, vom Isolierelement (39) überdeckte Ringkanalwand (31) im Querschnitt durchgängig aus einem Vollmaterial mit geringer Wandstärke gebildet ist, und dass die von dem Heißwasser-Ringkanal (27) abgewandte Seite der Kanalwand (31) eine potentielle Berührfläche (37) für den Nutzer bildet.

2. Sanitärarmatur nach Anspruch 1, **dadurch gekennzeichnet, dass** das Isolierelement (39) ein elastisch nachgiebiges Kunststoffteil Ist, und dass das Isolierelement (39) einen ringförmig geschlossenen Grundkörper (41) aufweist, dessen Außendurchmesser in seinem demontierten Fertigungszustand um ein Übermaß größer ist als der Innendurchmesser der Ringkanalwand (31), und dass das Isolierelement (39) in seiner Einbaulage unter Aufbau einer Rückstellkraft in Druckanlage mit der Ringkanalwand (31) ist.

3. Sanitärarmatur nach Anspruch 2, **dadurch gekennzeichnet, dass** der ringförmige Grundkörper (41) des Isolierelements (39) C-förmig offen ist, und dass der ringförmige Grundkörper (41) des Isolierelements (39) zumindest eine radial nach innen abragende Stützkontur (53) aufweist, mit der das Isolierelement (39) gegen die Ringkanalwand (31) in Druckanlage bringbar ist.

4. Sanitärarmatur nach Anspruch 2 oder 3, **dadurch gekennzeichnet, dass** der ringförmige Grundkörper (41) des Isolierelements (39) eine Verdrehsicherungs-Kontur (57) aufweist, und dass die Verdrehsicherungs-Kontur (57) radial außen am ringförmigen Grundkörper (41) ausgebildet ist oder in Axialrichtung abragt sowie in Eingriff mit einer gehäuseseitigen Gegenkontur (59) ist.

5. Sanitärarmatur nach Anspruch 2, 3 oder 4, **dadurch gekennzeichnet, dass** der ringförmige Grundkörper (41) des Isolierelements (39) eine Heißwasseröffnung (49) aufweist, durch die das Heißwasser in den Heißwasser-Ringkanal (27) einströmbar ist, und/oder dass am ringförmigen Grundkörper (41) ein radial nach außen abragender Einlaufstutzen (51) ausgebildet ist, der die Heißwasseröffnung (49) begrenzt und als Verdrehsicherungs-Kontur (57) in das Heißwasseranschlussprofil (19) oder in den Überströmkanal (29) einragt.

6. Sanitärarmatur nach einem der Ansprüche 2 bis 5, **dadurch gekennzeichnet, dass** sich am Mischventil (3) ausgangsseitig ein Mischwasserkanal (5) anschließt, der zu einer nutzerseitig betätigbaren Wasserverteileinheit (7) geführt ist, in der die Mischwassermenge zu wenigstens einem Verbraucher einstellbar ist, und dass der ringförmige Grundkörper (41) des Isolierelements (39) in Axialrichtung unter Bildung eines Mischwasserkanal-Abschnitt (61) bis über das Mischventil (3) hinaus verlängert ist.

7. Sanitärarmatur nach Anspruch 6, **dadurch gekennzeichnet, dass** das Isolierelement (39) einen hohlzylindrischen Zentrierabschnitt (63) aufweist, der in Axialrichtung betrachtet zwischen dem ringförmigen Grundkörper (41) und dem Mischwasserkanal-Abschnitt (61) ausgebildet ist und in der Radialrichtung betrachtet zwischen dem Mischventil (3) und der hohlzylindrischen inneren Aufnahmekontur (43) des Armaturengehäuses (1) abgestützt ist.

## Claims

1. Sanitary fitting, having a fitting housing (1), in which there is arranged a user-operable mixer valve (3) for setting a mixed water temperature, which mixer valve is connected via a hot water channel to a housing-side hot water connection and via a cold water channel (35) to a housing-side cold water connection, the hot water channel being at least partly defined by a housing-side channel wall, wherein for scald protection the sanitary fitting has at least one insulating element (39), wherein the hot water channel is an annular hot water channel (27), which runs around the mixer valve (3) and is defined radially on the inside by the mixer valve (3) and radially on the outside by a housing-side annular channel wall (31), wherein the fitting housing (1) is hollow-cylindrical and has on an end face (13) an inner receiving contour (43) in which the insulating element (39) is installed, and wherein the fitting housing (1) has, transverse to the housing axis (G), hollow-cylindrical connection profiles (19, 21) for the hot and cold water connections, and wherein the hot water connection profile (19) is formed radially outside the mixer valve receiving contour (43), and wherein the fitting housing (1) has an overflow channel (29) which connects the annular hot water channel (27) to the hot water connection profile (19), **characterised in that** the insulating element (39) at least partly covers the side of the annular channel wall (31) that faces towards the annular hot water channel (27), and the annular channel wall (31) defining the annular hot water channel (27) and covered by the insulating element (39) is in cross-section formed throughout from a solid material having a small wall thickness, and the side of the channel wall (31) that faces away from the annular hot water channel (27) forms a potential contact surface (37) for the user.

2. Sanitary fitting according to claim 1, **characterised in that** the insulating element (39) is a resiliently flexible plastics part, and the insulating element (39) has an annularly closed main body (41), the external diameter of which in its demounted production state is oversized relative to the internal diameter of the annular channel wall (31), and the insulating element (39) in its installed position is in pressing contact with the annular channel wall (31), establishing a restoring force.

3. Sanitary fitting according to claim 2, **characterised in that** the annular main body (41) of the insulating element (39) is open in a C-shape, and the annular main body (41) of the insulating element (39) has at least one radially inwardly projecting support contour (53) with which the insulating element (39) can be brought into pressing contact against the annular channel wall (31).

4. Sanitary fitting according to claim 2 or 3, **characterised in that** the annular main body (41) of the insulating element (39) has an anti-rotation contour (57), and the anti-rotation contour (57) is formed radially on the outside on the annular main body (41) or projects in the axial direction and is in engagement with a housing-side counter-contour (59).

5. Sanitary fitting according to claim 2, 3 or 4, **characterised in that** the annular main body (41) of the insulating element (39) has a hot water opening (49) through which the hot water is able to flow into the annular hot water channel (27), and/or a radially outwardly projecting inlet connector (51) is formed on the annular main body (41), which inlet connector defines the hot water opening (49) and projects as an anti-rotation contour (57) into the hot water connection profile (19) or into the overflow channel (29).

6. Sanitary fitting according to any one of claims 2 to 5, **characterised in that** the mixer valve (3) is adjoined on the output side by a mixed water channel (5) which leads to a user-operable water-distribution unit (7) in which the amount of mixed water to at least one consumer is adjustable, and the annular main body (41) of the insulating element (39) is extended in the axial direction beyond the mixer valve (3) to form a mixed water channel section (61).

7. Sanitary fitting according to claim 6, **characterised in that** the insulating element (39) has a hollow-cylindrical centring section (63) which, viewed in the axial direction, is formed between the annular main body (41) and the mixed water channel section (61) and, viewed in the radial direction, is supported between the mixer valve (3) and the hollow-cylindrical inner receiving contour (43) of the fitting housing (1).

## Revendications

1. Robinet sanitaire comportant un corps de robinet (1) dont le côté utilisateur comporte un mitigeur (3) réglable pour régler la température de l'eau mélangée et qui est relié par un canal d'eau chaude à un branchement d'eau chaude, côté corps et par un canal d'eau froide (35) à un branchement d'eau froide, côté corps,
le canal d'eau chaude étant délimité au moins partiellement par une paroi de canal, côté corps,
le robinet sanitaire comportant au moins un élément isolant (39) pour éviter les brûlures,
le canal d'eau chaude étant un canal annulaire d'eau chaude (27) entourant le mitigeur (3), ce canal annulaire étant délimité radialement à l'intérieur par le mitigeur (3) et radialement à l'extérieur par une paroi (31) côté corps du robinet du canal annulaire,
le corps de robinet (1) étant de forme cylindrique creuse avec sur une face frontale (13) un contour de réception (43) intérieur recevant l'élément isolant (39), et
le corps de robinet (1) ayant des profils de raccordement (19, 21) cylindriques, creux ou transversalement à l'axe (G) du corps de robinet pour le branchement d'eau chaude et le branchement d'eau froide, et
le profil de raccordement d'eau chaude (19) étant radialement à l'extérieur du contour de réception (43) du mitigeur, et
le corps de robinet (1) ayant un canal de passage (29) reliant le canal annulaire d'eau chaude (27) au profil de raccordement d'eau chaude (19), **caractérisé en ce que**
l'élément isolant (39) recouvre au moins partiellement le côté de la paroi du canal annulaire (31) tourné vers le canal annulaire d'eau chaude (27), et
la paroi de canal annulaire (31) délimitant le canal annulaire d'eau chaude (27) et couverte par l'élément isolant (39) par une paroi de section continue en une matière pleine, de faible épaisseur de paroi, et
le côté de la paroi de canal (31) non tourné vers le canal annulaire d'eau chaude (27) formant une surface de contact potentiel (37) pour l'utilisateur.

2. Robinet sanitaire selon la revendication 1,
**caractérisé en ce que**
l'élément isolant (39) est une pièce en matière plastique élastique souple, et
l'élément isolant (39) a un corps de base (41) annulaire fermé dont le diamètre extérieur à l'état installé terminé, est surdimensionné par rapport au diamètre intérieur de la paroi du canal annulaire (31), et l'élément isolant (39) en position installée, génère une force de rappel en appui de compression contre la paroi (31) du canal annulaire.

3. Robinet sanitaire selon la revendication 2,
**caractérisé en ce que**
le corps de base annulaire (41) de l'élément isolant (39) est ouvert en forme de C, et
le corps de base annulaire (41) de l'élément isolant (39) a au moins un contour d'appui (53) venant en saillie radialement vers l'intérieur, pour mettre en appui de compression, l'élément isolant (39) contre la paroi du canal annulaire (31).

4. Robinet sanitaire selon la revendication 2 ou 3,
**caractérisé en ce que**
le corps de base annulaire (41) de l'élément isolant (39) comporte un contour (57) de blocage en rotation, et
le contour (57) de blocage en rotation forme un corps de base (41), annulaire, radialement en saillie ou venant en saillie dans la direction axiale et il est en prise avec un contre profil (59) côté boîtier.

5. Robinet sanitaire selon les revendications 2, 3 ou 4,
**caractérisé en ce que**
le corps de base annulaire (41) de l'élément isolant (39) a un orifice d'eau chaude (49) par lequel l'eau chaude arrive dans le canal annulaire d'eau chaude (27) et/ou qui forme un ajutage d'entrée (51), venant radialement en saillie vers l'extérieur sur le corps de base annulaire (41), cet ajutage délimitant un orifice d'eau chaude (49) et pénétrant dans le profil de raccordement d'eau chaude (19) ou dans le canal de raccordement (29) comme contour anti-rotation (57).

6. Robinet sanitaire selon l'une des revendications 2 à 5,
**caractérisé en ce que**
côté sortant, le mitigeur (3) est relié à un canal d'eau mélangée (5) qui arrive à une unité distribution d'eau (7) actionnée par l'utilisateur et dans laquelle se règle la quantité d'eau mélangée vers au moins un utilisateur, et
le corps de base annulaire (41) et l'élément isolant (39) est prolongé dans la direction axiale au-delà du mitigeur (3) pour former un segment de canal d'eau mélangée (61).

7. Robinet sanitaire selon la revendication 6,
**caractérisé en ce que**
l'élément isolant (39) comporte un segment de centrage (63) cylindrique creux, réalisé dans la direction axiale, entre le corps de base annulaire (41) et le segment de canal d'eau mélangée (61) et qui, dans la direction radiale, s'appuie entre le mitigeur (3) et le contour récepteur (43) intérieur cylindrique creux du corps de robinet (1).
